# EUROPÄISCHE PATENTANMELDUNG

(11) **EP 3 935 957 A1**
(43) Veröffentlichungstag der Anmeldung: **12.01.2022**
(21) Anmeldenummer: 21183791.9
(22) Anmeldetag: 05.07.2021
(51) Int. Cl.: A23L 5/10, A23L 23/10, A23L 27/10

(54) **INSTANT-SOSSENPULVER, INSBESONDERE INSTANT-CURRYSOSSENPULVER**

(30) Priorität: 10.07.2020 DE 102020118275
(71) Anmelder: Hornik, Kevin Jeffrey, 80799 München (DE)
(72) Erfinder: Hornik, Kevin Jeffrey, 80799 München (DE)
(74) Vertreter: Grape & Schwarzensteiner

(57) **Zusammenfassung**

Die Erfindung betrifft das Gebiet der Instant-Lebensmittel-produkte, insbesondere Instant-Soßen. Insbesondere betrifft die Erfindung ein Verfahren zur Herstellung eines Instant-Soßenpulvers aus trockenen und Feuchtigkeit enthaltenden Würzkomponenten in pastöser Form, welche durch eine geeignete Wärmebehandlung gleichzeitig getrocknet und aromatisiert werden.

## Beschreibung

Die vorliegende Erfindung betrifft im weitesten Sinne das Gebiet der Instant-Lebensmittelprodukte, insbesondere Instant-Soßen. Insbesondere betrifft die Erfindung ein Verfahren zur Herstellung eines Instant-Soßenpulvers aus Würzkomponenten, welche selbst trocken sein können oder einen Feuchtigkeitsgehalt aufweisen. Die Würzkomponenten dienen als Basis für die erfindungsgemäße Weiterverarbeitung zu einem Instant-Soßenpulver für die Zubereitung von Gewürzsoßen, insbesondere Currysoßen.

Im Stand der Technik sind verschiedenste Verfahren zur Erzeugung von Lebensmittelprodukten mit Instant-Eigenschaften bekannt. Instant-Produkte sind zur Erleichterung und/oder Beschleunigung der Herstellung von Speisen in Großküchen, in der Gastronomie und in Privathaushalten gedacht. Es handelt sich dabei überwiegend um die Basis von Suppen, Soßen und dergleichen oder um gefriergetrocknete Kräuter oder andere pflanzliche Produkte zu deren Haltbarmachung, respektive Konservierung.

Die DD 248 502 A1 beschreibt beispielsweise ein Verfahren zur Herstellung von kochfertigen Suppen, Soßen und Brüherzeugnissen in granulierter Form mit Instantcharakter. Es werden je nach herzustellendem Endprodukt zusammengesetzte Rohstoffmischungen mit einer Feuchte von 30 bis 75 % mittels Granulierpresse oder Extruder granuliert bzw. extrudiert, wobei die Granulate bzw. Extrudate direkt in einen Wirbelschichtgranulator eingepresst, dort getrocknet und anschließend mit Kohlenhydraten und/oder Fetten und/oder Gummen ummantelt werden.

In der DE 10 2013 018 497 A1 wird ein Verfahren zur Herstellung von dehydratisierten Lebensmitteln und Pflanzenerzeugnissen beschrieben, bei dem frische oder tiefgefrorene pflanzliche Ausgangsstoffe, z.B. in eine kohlenhydrathaltige (Maltodextrin und/oder eine Mischung aus dextriniertem Kohlenhydrat und pflanzlicher Stärke) unter Ausbildung einer homogenen Suspension aufgenommen werden. Dabei wird ein Dünnschichtfilm um die pflanzlichen Ausgangsstoffe gebildet, welcher bei der anschließenden Verarbeitung zu einem rieselfähigen Pflanzenprodukt darauf verbleibt.

Die EP 2 713 772 B1 beschreibt ebenfalls ein Verfahren zur Herstellung von dehydrierten bzw. getrockneten Lebensmitteln, insbesondere Gemüse, gegebenenfalls unter Beimengung von Kräutern und oder Gewürzen. Dazu wird eine Gemüse-Öl-Mischung relativ kurzzeitig (wenige Sekunden bis Minuten) in Abhängigkeit von der Temperatur erhitzt sowie vor, gleichzeitig oder nach dem Erhitzen püriert und anschließend in einem Trommel- bzw. Walzentrockner getrocknet. Das Produkt enthält somit Öl.

Nachteilig bei dem aufgezeigten Stand der Technik ist, dass die jeweils verarbeiteten Ausgangsstoffe an Frische und Aroma verlieren und geschmacklich verändert werden, da sie zur Verarbeitung mit Zusatzstoffen, wie insbesondere Stärke, Kohlenhydraten etc. versetzt werden, um die Quellfähigkeit sicherzustellen.

Aufgabe der vorliegenden Erfindung ist die Bereitstellung von Instantsoßen bzw. -pulvern, insbesondere von Instant-Currysoßen bzw. -pulver. Ziel ist es, die Instant-Soßenpulver nach einem Verfahren herzustellen, das einfach und mit wenig Aufwand durchzuführen ist und mit welchem die Aromen einer händisch selbstgerührten Soße erhalten bleiben sowie alle Soßen-Bestandteile bzw. -Komponenten zuverlässig und in einer Weise konserviert sind, dass beim Auflösen des Pulvers, dem Anrühren der Soße, das volle Aroma und eine gewünschte Konsistenz entwickelt wird.

Gegenstand der vorliegenden Erfindung ist somit ein Verfahren zur Herstellung eines Instant-Gewürzsoßenpulvers aus Würzkomponenten, welche selbst trocken sein können oder einen Feuchtigkeitsgehalt aufweisen, umfassend die Schritte:
a) Bereitstellen einer einheitlichen, homogenen und pastösen Masse, bestehend aus Würzkomponenten einer herzustellenden Soße,
b) Auftragen der gewonnen pastösen Masse in einer dünnen Schicht gleichmäßiger Schichtdicke auf einen Träger,
c) Erwärmen der Masse auf eine auf die Schichtdicke abgestimmte Temperatur, welche eine Dehydrierung, d.h. Trockung und gleichzeitig schonende Röstung, d.h. Aromatisierung der Masse erlaubt,
d) Vermahlen der so getrockneten Masse zu einem einheitlichen feinen Pulver.

Auf diese Weise lassen sich Instantsoßenpulver einfach und ohne großen apparativen Aufwand, auch in industriellem Maßstab, unter Konservierung aller Komponenten und Aromen, auch der Röstaromen, zuverlässig und reproduzierbar erzeugen. Die schonende Trocknung und gleichzeitig schonende Röstung konserviert Qualität, Geschmack, Vitamine und Mineralstoffe der Würzkomponenten, welche somit ihr volles Aroma beibehalten und beim Auflösen/Anrühren wieder entfalten können.

Hinsichtlich der Würzkomponenten ist festzuhalten dass unter trockenen Komponenten alle Gewürze zu verstehen sind, die aus einem bereits getrockneten Ausgangs-, respektive reinen Rohstoff bestehen, wohingegen unter feuchten Würzkomponenten auch frische Pflanzen/Kräuter zu verstehen sind.

Vorteilhafte und bevorzugte Ausführungsformen des erfindungsgemäßen Verfahrens ergeben sich aus den Unteransprüchen 2 bis 16.

Im Rahmen der vorliegenden Erfindung kann den vorher genannten Würzkomponenten zusätzlich eine flüssige Würzkomponente vor oder während der Verarbeitung zur pastösen Masse zugegeben werden, um bestimmte Geschmacksnoten hinzuzufügen und/oder um die Masse geschmeidiger zu machen. Eine flüssige Würzkomponente könnte beispielsweise eine Brühe auf pflanzlicher Basis sein.

Gleichermaßen kann es von Vorteil sein der in Schritt c) gewonnenen trockenen Masse vor dem Vermahlen weitere trockene Gewürze, Würzmittel und/oder Additive zuzugeben, welche entweder die Geschmacksnote nuancieren oder die Quellfähigkeit des Pulvers beeinflussen.

Prinzipiell ist es auch möglich, bei der Herstellung des Instantsoßenpulvers von einer bereits vorgefertigten, im Handel erhältlichen pastösen Masse auszugehen. Eine solche Vorgehensweise erspart den aufwändigen Schritt der Zubereitung der pastösen Gewürzpaste. Voraussetzung ist aber, dass solche handelsüblichen pastösen Massen nicht nur die gewünschten Würzkomponenten enthalten, sondern diese auch im gewünschten und für den Geschmack ausschlaggebenden Mengenverhältnis sowie in der bevorzugten hohen Qualität.

Bevorzugt wird deshalb die pastöse Masse für jeden gewünschten Soßen-Typ vorab individuell hergestellt, indem man ausgewählte trockene und feuchte (solche mit einem Feuchtegehalt) Würzkomponenten im gewünschten Mengenverhältnis vermengt und mit üblichen Methoden zu einer homogenen, einheitlichen Masse/Paste vermahlt bzw. verreibt, wobei sich auch insbesondere die Viskosität bzw. der Feuchtigkeitsgrad der Masse für die weitere Verarbeitung besser einstellen lässt.

Die Viskosität bzw. der Feuchtigkeitsgrad lässt sich beispielweise auch durch die Zugabe einer flüssigen Würzkomponente, beispielsweise Fischsoße, wenn das Produkt nicht vegetarisch/vegan sein soll, variieren und einstellen. Gegebenenfalls kann man die Fischsoße oder Brühe zur Einstellung einer gewünschten bzw. für das Auftragen geeigneten Viskosität durch Wasser oder eine vegetarische Würzsoße, wie z.B. Austernpilzsoße ersetzen.

Bei dieser Ausführungsform können Ausgangskomponenten hoher Qualität, z.B. Bioqualität eingesetzt werden.

Die Viskosität bzw. der Feuchtigkeitsgrad ist für den Schritt c) des Auftragens der pastösen Masse auf den Träger, im einfachsten Fall ein Blech mit Antihaft-Beschichtung, wesentlich, da für ein Gelingen der weiteren Verfahrensschritte eine gleichförmige Schichtdicke erforderlich ist.

Erfindungsgemäß wird die gewonnene pastöse Masse in einer Schichtdicke von < 10 mm, vorzugsweise < 5 mm auf den Träger, z.B. ein Blech, aufgebracht. Je geringer die Schichtdicke, desto gleichmäßiger lässt sich die Masse gleichmäßig und bei gleichförmigen Temperaturverhältnissen durcherwärmen. Mit anderen Worten, es ist eine möglichst einheitliche Temperatur über die Schichtdicke der aufgetragenen Masse anzustreben, damit ein gleichmäßiger und vollständiger Austrag der Feuchtigkeit über die Fläche und Dicke, ohne ein Anlegen oder gar Verbrennen, gewährleistet ist.

Im Rahmen der Entwicklung des erfindungsgemäßen Verfahrens hat sich für kleine Ansätze (kleiner Maßstab)eine Schichtdicke von zwischen 2 bis 3 mm als vorteilhaft und praktikabel erwiesen. Bei einer Übertragung auf industrielle Fertigungsbedingungen sind sicher größere Schichtdicken möglich.

Die pastöse Masse wird vorteilhaft durch Aufstreichen/Pressen, Rollen oder Sprühen auf den Träger, z.B. das Blech, aufgetragen und sodann in Abhängigkeit von der Schichtdicke auf eine Temperatur von zwischen 80 °C bis maximal 120 °C, vorzugsweise 90 °C und bis 110 °C erwärmt bzw. erhitzt und dabei gleichzeitig dehydratisiert und geröstet (aromatisiert).

Um diesen Vorgang zu unterstützen wird in einem den Träger umschließenden Raum, beispielweise einem Ofen, gearbeitet, wobei während des Erwärmens/Erhitzens Luft zwangszirkuliert und die verdampfte Feuchtigkeit stetig abgeleitet wird, um für eine gleichmäßige Temperaturverteilung und Temperatureinwirkung auf die Masse Sorge zu tragen.

Die Masse wird für wenigsten 3 Stunden bis maximal 12 Stunden, vorzugsweise 4 Stunden unter den genannten Bedingungen erwärmt/erhitzt, um eine vollständige Trocknung und gleichzeitig milde Röstung zu gewährleisten.

Im Rahmen der vorliegenden Erfindung werden die Würzkomponenten vorzugsweise unter Anis, Asafoetida (Asant), Bockshornklee, Bohnen(paste), Cashewnüssen, Erdnüssen, Chilis (frisch und/oder getrocknet), Edamame, Fenchel(samen), Garam Masala, Galangawurzel, Ingwer, Kardamom (grün und/oder schwarz), Kaffernlimettenschalen/-blätter, Kichererbsen(mehl), Knoblauch, Koriander (frisch, getrocknet, Wurzel oder Samen), (Kreuz)kümmel, Kurkuma, Lorbeer, Mandeln, Mangopulver, Misopaste, Mungobohnen, Muskat(blüte), Nelken, Paprika, Parsley European Gras (langer Koriander), Pfeffer, Salz, Senfkörner, Senfpulver, Sesam, Soyabohnen, Sternanis, (Schwarz)kümmel, Tamarinden, Thaibasilikum, Wacholder, Zimt, Zitronengras, Zwiebeln (Schalotten), optional Garnelenpaste ausgewählt werden und optional als Flüssigkomponente Fischsoße oder eine vegetarische/vegane Brühe.

Dabei handelt es sich im weitesten Sinne um Würzkomponenten für Curry-Soßen, wofür erfindungsgemäß Instantprodukte erzeugt werden sollen.

Ein wesentliches Ausgangsprodukt sind rote, grüne und gelbe Chilisorten oder Reifungsstufen davon.

Die trockenen Gewürze, Würzmittel oder Additive werden aus Kokosnusspulver, Zucker, Salz, vegetarischem oder nicht-vegetarischem Suppenpulver, Paprikapulver (edelsüß), Stärke, insbesondere Tapiokastärke und optional Sahnepulver, Fischsoße und frischen Kräutern ausgewählt. Sahnepulver und Fischsoße sind selbstverständlich keine Option für vegane oder vegetarische Soßen.

Die erfindungsgemäß erzeugten Instant-Currysoßen sollen für die Zubereitung und als Basis für Curries, insbesondere von rotem Curry, grünem Curry, gelbem Curry oder Massaman Curry, Panang- und Erdnusscurry dienen, sind aber keinesfalls darauf beschränkt, wie schon die Liste möglicher Würzkomponenten belegt.

Es ist nicht ausnahmslos die Auswahl der Würzkomponenten, welche die vorliegende Erfindung ausmachen. Wesentlich sind die Verarbeitungsschritte, welche eine gleichmäßige Dehydrierung der Gewürzpaste und deren schonende Röstung (Aromatisierung) garantieren. Ausschlaggebend ist die Art der Wärmebehandlung, d.h. die Einhaltung von Bedingungen der Schichtdicke der zu behandelnden Gewürzpaste, der Temperatur und der Dauer der Behandlung (Dehydrierung-Aromatisierung).

Im Folgenden sind Definitionen von Curry-Pasten und deren Inhaltsstoffen angegeben:

### 1. Rote Curry-Paste für Rotes Curry (Gaeng Phet)

Scharfe Paste aus rotem thailändischem Chili (Mäusekot-Chili). Die rote Farbe des Gerichts entstammt den vielen roten Zutaten, weswegen das Gericht auch als Gaeng Daeng (rote Suppe) bezeichnet wird. Weitere potentielle Zutaten der Paste sind:
Schalotten, Knoblauch, Galangawurzel, Zitronengras, Korianderwurzel, Kreuzkümmel, grüne Pfefferkörner, Salz, Kaffernlimettenblätter, Koriandersamen und/oder optional Garnelenpaste, wenn die Soße nicht vegetarisch/vegan sein muss.

### 2. Grüne Currypaste für grünes Curry (Gaeng Khiao Wan)

Sehr scharfe Paste, die bis zu 50 % aus grünem thailändischem Chili besteht. Namensgebend ist die überwiegend grüne Farbe der Zutaten. Weitere potentielle Zutaten dieser Paste sind:
Knoblauch, Schalotten, Galangawurzel, Koriandersamen, Korianderwurzel, geriebene Kaffernlimettenschale, Zitronengras, Kreuzkümmel, Salz, Pfeffer, Kurkuma und/oder optional Garnelenpaste, wenn die Soße nicht vegetarisch/vegan sein muss.

### Panang Currypaste für Panangcurry und Erdnusscurry

Pananang-Curry ist die mildeste, nur leicht scharfe, salzige, roten getrockneten thailändischen Chili enthaltende Variante. Die Gewürzzusammenstellung basiert grundlegend auf thailändischen Zutaten. Weitere potentielle Zutaten dieser Paste sind:
Knoblauch, Schalotten, Galangawurzel, Mungobohnen, Korianderwurzel, geriebene Kaffernlimettenschale, grüne Pfefferkörner, Koriandersamen, Kreuzkümmel, Salz, Pfeffer und/oder optional Garnelenpaste, wenn die Soße nicht vegetarisch/vegan sein muss.

Erdnuss-Curry unterscheidet sich davon nur durch die Zugabe von gerösteten, gehackten und/oder geriebenen Erdnüssen.

### 3. Gelbe Curry-Paste für gelbes Curry (Gaeng Luang)

Gelbe Curry-Paste ist eine mittelscharfe Paste aus getrocknetem thailändischen Chili sowie Gewürze aus anderen asiatischen Einflüssen Die gelbe Farbe des Produkts rührt überwiegend von den gelben Zutaten her. Weitere potentielle Zutaten der Paste sind:
Kurkuma, Schalotten, Zitronengras, Knoblauch, Galangawurzel, Kreuzkümmel, Koriandersamen, Mungobohnen, Salz, geriebene Kaffernlimettenschale, Zimt, Muskat, Gewürznelken, Kardamom und optional Garnelenpaste, wenn die Soße nicht vegetarisch/vegan sein muss.

### 4. Massaman Currypaste für Massaman-Curry (Gaeng Massaman)

Massaman-Curry hat seinen Ursprung in Südthailand. Sie ist mittelscharf und enthält neben thailändischen auch indische Gewürze. Potentielle Zutaten der Paste sind:
Getrocknete thailändische Chili, Schalotten, Knoblauch, Galangawurzel, Koriandersamen, Kreuzkümmel, Zitronengras, Gewürznelken, grüne Pfefferkörner Salz und optional Garnelenpaste, wenn die Soße nicht vegetarisch/vegan sein muss.

Die aus diesen Komponenten gewonnenen Pasten lassen sich durch die erfindungsgemäßen Verfahrensschritte des Dehydrierens und Aromatisierens zu einem feinen Pulver unter Erhalt des Aromas und Konservierung aller Soßen-Bestandteile bzw. -Komponenten wie bei einer händisch selbstgerührten Soße.

### Herstellungsbeispiel

Der Herstellungsprozess für ein Instant-Pulver für Gewürz-Soßen, insbesondere Curry-Soßen, unterteilt sich im Wesentlichen in zwei Hauptschritte.

Schritt 1 beinhaltet zunächst das Bereitstellen einer Gewürzpaste, insbesondere Currypaste, einer gewünschten Geschmacksrichtung, entweder als handelsübliches Fertigprodukt oder bevorzugt durch Vermengen aller für eine bestimmte Geschmacksrichtung spezifischen Würzkomponenten zu einer einheitlichen, homogenen und Paste. Diese Paste kann mit weiteren feuchten Gewürzkomponenten innig vermengt werden. Weitere feuchte Komponenten können beispielsweise Fischsoße oder Kräuter, wie Thaibasilikum, sein. Soll die Paste bzw. das Endprodukt vegetarisch sein, wird die Fischsoße weggelassen oder durch zur eventuell erforderlichen Einstellung der Viskosität durch Wasser oder eine vegetarische Gewürzsoße/-brühe ersetzt. Es wird ein Feuchtigkeitsgrad bzw. eine Viskosität eingestellt, welche das Auftragen der feuchten Masse auf einen antihaftbeschichteten, hitzeresistenten Träger (z.B. ein Blech) in einer dünnen, gleichmäßigen Schicht erlaubt.

Nach dem Auftragen der Masse wird diese mit dem Träger (Blech) in einen Ofen eingebracht, dessen Temperatur auf zwischen 80 °C und maximal 120 °C, vorzugsweise 90 °C und maximal °110 °C, insbesondere bevorzugt 100 °C eingestellt bzw. reguliert wird. Durch die Wärmeeinwirkung wird der Masse Feuchtigkeit entzogen, gleichzeitig wird sie schonend geröstet und damit aromatisiert. Eine niedrige Rösttemperatur ist in diesem Schritt unabdinglich, um die Masse zu aromatisieren, ihr gleichzeitig die Feuchtigkeit zu entziehen ohne sie zu verbrennen. Bei Temperaturen oberhalb von 120 °C können einzelne Komponenten rasch verbrennen, wodurch der Geschmack negativ beeinflusst wird. Unterhalb von 80 ° C findet keine zufriedenstellende Ausbildung von Röstaromen statt.

Zwei Faktoren beeinflussen hier den Zeitaufwand für den Feuchtigkeitsentzug und die Aromatisierung der Masse.

Faktor 1 ist die Höhe/Dicke der ebenmäßig aufgetragenen Masse. Je dünner und gleichmäßiger die Masse beispielsweise durch Aufstreichen, -pressen, -rollen, oder -sprühen aufgetragen ist, desto weniger Feuchtigkeit muss pro Flächeneinheit ausgetragen werden. Das heißt es besteht auch eine Relation zwischen der Menge der verwendeten Masse zu der vorhandenen oder zu verwendenden Auftragsfläche.

Faktor 2 bezieht sich auf die Temperatur, Hitzeverteilung und Hitzewirkung auf die zu trocknende Masse. Eine zu geringe Temperatur, wie sie beispielsweise beim Lufttrocknen, Sonnentrocknen oder Dörren, das sind Temperaturen bis zu maximal 70 °C, verwendet wird, erzielt zwar einen schonenden Feuchtigkeitsentzug, hat aber keinen Einfluss auf die Aromatisierung und Röstung der Masse. Temperaturen über 120 °C haben dagegen über den Zeitraum, welcher zur Trocknung der Masse erforderlich ist, eine zu starke Röstung, sogar das Anbrennen/Verbrennen zur Folge. Damit einhergehen Qualitäts-, Geschmacks- und Mengenverluste durch das Entstehen von Bitterstoffen und das Verbrennen der Masse.

Hinsichtlich der Wärmeverteilung erzeugt eine provozierte Zirkulation der heißen Luft innerhalb eines ventilierten und geschlossenen Raums, z.B. die Umluft in einem Backofen, eine einheitliche Hitzeeinwirkung auf die Masse, die eine direkte Wirkung auf die Effektivität der Aromatisierung und den Feuchtigkeitsentzug hat.

Im Ergebnis werden idealerweise alle Zutaten vermengt, auf ein antihaftbeschichtetes Blech in einer gleichmäßigen Dicke von 2 bis 3 mm aufgetragen und bei 100 °C während wenigstens 4 Stunden unter erzwungener Luftzirkulation in einem geschlossenen Raum getrocknet und geröstet/aromatisiert.

Dieser Prozess ist in industriellem Maßstab möglich bzw. auf einen solchen übertragbar.

Im Anschluss wird die getrocknete Masse zu einem feinen Pulver gemahlen.

Schritt 2 beinhaltet schließlich das Vermengen der getrockneten pulverisierten Currypaste mit allen weiteren trocknen Pulverzutaten nach Rezept und das Vermahlen aller Komponenten auf die gleiche, feine Pulvermahlstufe. Weitere trockene Pulverzutaten können sein:
Kokosnusspulver, Sahnepulver (optional), Zucker, Salz, vegetarisches oder nicht-vegetarisches Suppenpulver Paprikapulver (edelsüß) und/ oder Tapiokastärke.

Eine Portionseinheit des Currysoße-Instantpulvers entspricht beispielsweise einer Abfüllmenge von 70 g, welche vorzugsweise in einer luft- und lichtdichten Packung zu lagern ist.

Zur Zubereitung der Soße wird die Portionseinheit Instant-Pulver mit 250 ml, vorzugsweise kochendem Wasser in einem Topf unter ständigem Rühren vermengt und bis zum Siedepunkt aufgekocht.

Die daraus entstandene Currysoße entspricht ca. 300g Nettogewicht. Sie kann als Basiszutat für Currygerichte verwendet und/oder weiterverarbeitet und nach Belieben durch Zugabe von Gemüse, Fleisch oder Fisch personalisiert werden.

## Patentansprüche

1. Verfahren zur Herstellung eines Instant-Gewürzsoßenpulvers aus trockenen und feuchten Würzkomponenten, umfassend die Schritte:
a) Bereitstellen einer einheitlichen, homogenen und pastösen Masse, bestehend aus Würzkomponenten für eine herzustellende Soße,
b) Auftragen der gewonnen pastösen Masse in einer Schicht gleichmäßiger Schichtdicke auf einen Träger,
c) Erwärmen der Masse auf eine von der Schichtdicke abhängigen Temperatur, welche eine Dehydrierung und gleichzeitig schonende Röstung, d.h. Aromatisierung der Masse erlaubt,
d) Vermahlen der so getrockneten Masse zu einem einheitlichen feinen Pulver.

2. Verfahren gemäß Anspruch 1, **dadurch gekennzeichnet, dass** den Würzkomponenten zusätzlich eine flüssige Würzkomponente vor oder während der Verarbeitung zu der pastösen Masse zugegeben wird.

3. Verfahren gemäß Anspruch 1 und/oder 2, **dadurch gekennzeichnet, dass** der in Schritt c) gewonnenen trockenen Masse vor oder während dem Vermahlen weitere trockene Gewürze, Würzmittel und/oder Additive zugegeben werden.

4. Verfahren gemäß Anspruch 2 und/oder 3, **dadurch gekennzeichnet, dass** von einer im Handel erhältlichen Gewürzpaste ausgegangen wird.

5. Verfahren gemäß einem der Ansprüche 1 bis 4, **dadurch gekennzeichnet, dass** man die Gewürzpaste erzeugt, indem ausgewählte trockene Würzkomponenten und solche mit einem Feuchtegehalt, welche den Geschmack einer herzustellende Soße bestimmen, in einem gewünschten Mengenverhältnis vermengt und mit üblichen Methoden zu einer homogenen, einheitlichen Paste verarbeitet werden.

6. Verfahren gemäß einem der Ansprüche 1 bis 5, **dadurch gekennzeichnet, dass** die gewonnene pastöse Masse in einer Schichtdicke von < 10 mm, vorzugsweise < 5 mm auf den Träger aufgebracht wird.

7. Verfahren gemäß Anspruch 6, **dadurch gekennzeichnet, dass** eine Schichtdicke von zwischen 2 bis 3 mm eingestellt wird.

8. Verfahren gemäß einem der Ansprüche 1 bis 7, **dadurch gekennzeichnet, dass** die pastöse Masse durch Aufstreichen/Pressen, Rollen oder Sprühen auf den Träger aufgetragen wird.

9. Verfahren gemäß einem der Ansprüche 1 bis 8, **dadurch gekennzeichnet, dass** die Masse in Abhängigkeit von der Schichtdicke auf eine Temperatur von zwischen 80 °C und maximal 120 °C, vorzugsweise 90 °C bis 110 °C erwärmt und dabei gleichzeitig dehydriert und geröstet (aromatisiert) wird.

10. Verfahren gemäß Anspruch 9, **dadurch gekennzeichnet, dass** während des Erwärmens durch Luftzirkulation und Ableiten der verdampften Feuchtigkeit in einem geschlossenen Raum für eine gleichmäßige Temperaturverteilung und Temperatureinwirkung auf die Masse Sorge getragen wird.

11. Verfahren gemäß Anspruch 9 oder 10, **dadurch gekennzeichnet, dass** die Masse für wenigstens 3 Stunden und maximal 12 Stunden, vorzugsweise etwa 4 Stunden unter den genannten Bedingungen erwärmt wird.

12. Verfahren gemäß einem der Ansprüche 1 bis 11, **dadurch gekennzeichnet, dass** die Würzkomponenten unter Anis, Asafoetida (Asant), Bockshornklee, Bohnen(paste), Cashewnüssen, Erdnüssen, Chilis (frisch und/oder getrocknet), Edamame, Fenchel(samen), Garam Masala, Galangawurzel, Ingwer, Kardamom (grün und/oder schwarz), Kaffernlimettenschalen/-blätter, Kichererbsen(mehl)Knoblauch, Koriander, (Kreuz)kümmel, Kurkuma, Lorbeer, Mandeln, Mangopulver, Misopaste, Mungobohnen, Muskat(blüte), Nelken, Paprika, Parsley European Gras (langer Koriander), Pfeffer, Salz, Senfkörner, Senfpulver, Sesam, Soyabohnen, Sternanis, (Schwarz)kümmel, Tamarinden, Thaibasilikum, Wacholder, Zimt, Zitronengras, Zwiebeln (Schalotten), optional Garnelenpaste ausgewählt werden und optional als Flüssigkomponente Fischsoße.

13. Verfahren gemäß Anspruch 12, **dadurch gekennzeichnet, dass** die Chilis aus roten, grünen und gelben Chilisorten oder Reifungsstufen davon ausgewählt werden.

14. Verfahren gemäß einem der Ansprüche 3 bis 13, **dadurch gekennzeichnet, dass** die trockenen Gewürze, Würzmittel oder Additive aus Kokosnusspulver, Zucker, Salz, vegetarischem oder nicht-vegetarischem Suppenpulver, Paprikapulver (edelsüß), Tapiokastärke und optional Sahnepulver, Fischsoße und frischen Kräutern ausgewählt werden.

15. Verfahren gemäß einem jeden der Ansprüche 1 bis 14 zur Erzeugung einer Instant-Currysoße für die Zubereitung von Curries.

16. Verfahren gemäß Anspruch 15 zur Herstellung einer Instant Currysoße zur Zubereitung von rotem Curry, grünem Curry, gelbem Curry, Massaman Curry, Panang- und Erdnusscurry.
